## Europäisches Patentamt

## European Patent Office

## Office européen des brevets

(11) Veröffentlichungsnummer: **0 058 297**
**B1**

(12) **EUROPÄISCHE PATENTSCHRIFT**

(45) Veröffentlichungstag der Patentschrift:
12.09.84

(51) Int. Cl.³: **B 29 C 17/07**, B 29 D 23/04,
G 05 B 19/00

(21) Anmeldenummer: 82100254.0

(22) Anmeldetag: 15.01.82

(54) **Verfahren und Vorrichtung zum Herstellen eines Vorformlinges aus thermoplastischem Kunststoff mittels eines Extruders.**

(30) Priorität: 23.01.81 DE 3102076

(43) Veröffentlichungstag der Anmeldung:
25.08.82 Patentblatt 82/34

(45) Bekanntmachung des Hinweises auf die Patenterteilung:
12.09.84 Patentblatt 84/37

(84) Benannte Vertragsstaaten:
AT CH DE FR GB IT LI

(56) Entgegenhaltungen:
DE - A - 2 152 837
DE - A - 2 308 656
DE - A - 2 544 609
DE - A - 2 733 265

Prospekt "Blasformen" der Fa. Moog GmbH v.
21.05.1976

(73) Patentinhaber: Krupp Kautex Maschinenbau GmbH,
D-5300 Bonn 3 (DE)

(72) Erfinder: Daubenbüchel, Werner, Dipl.-Ing., Juckaberg,
D-5060 Bergisch-Gladbach 4 (DE)
Erfinder: Hess, Dieter, Tannenstrasse 50,
D-5357 Swistal-Morenhoven (DE)
Erfinder: Kiefer, Erich, Siebengebirgsstrasse 30,
D-5300 Bonn 3 (DE)

(74) Vertreter: Koepsell, Helmut, Dipl.-Ing., Mittelstrasse 7,
D-5000 Köln 1 (DE)

## Beschreibung

Die Erfindung betrifft ein Verfahren gemäss dem ersten Teil des Anspruches 1 sowie eine Vorrichtung gemäss dem ersten Teil des Anspruches 5.

Die Austrittsöffnung des Strangpresskopfes ist im Falle der Herstellung von schlauchartigen Vorformlingen als Ringspalt ausgebildet. Da dies in der Praxis der häufigste Anwendungsfall ist, werden im folgenden immer das Herstellen eines schlauchförmiges Vorformlinges und eine entsprechend ringförmige Austrittsöffnung vorausgesetzt. Allerdings ist die Erfindung auch auf Vorformlinge, die eine andere Gestalt aufweisen, anwendbar, z.B. im Zusammenhang mit dem Strangpressen von band- oder folienartigen Formlingen, wobei auch hierbei unterschiedliche Querschnittsformen möglich sind.

Die z.B. aus der DE-B Nr. 2244609 bekannte Beeinflussung der Wanddicke des Vorformlinges nach einem bestimmten Programm berücksichtigt die Erfordernisse der Weiterverarbeitung in einer Blasform bzw. des dabei hergestellten Fertigerzeugnisses. Im allgemeinen ist die Anordnung so getroffen, dass in einer Programmeinrichtung über eine Strecke, die der Länge des Vorformlinges entspricht, in Abständen voneinander befindliche Schaltpunkte vorgesehen sind, die während des Extrusionsvorganges bei Erreichen einer bestimmten Länge des Vorformlinges eine Veränderung der Spaltbreite der Austrittsöffnung bewirken. Programmeinrichtungen, bei denen die Schaltpunkte konstante Abstände voneinander aufweisen, haben allerdings den Nachteil, dass die Position der Schaltpunkte selten der Position jener Punkte auf dem Vorformling entspricht, an denen Änderungen des Wanddickenverlaufs erfolgen sollen. Zwar wird mit Zunahme der Anzahl der Schaltpunkte auch die Genauigkeit grösser, mit welcher die Veränderungen durchgeführt werden können. Allerdings steigen mit zunehmender Anzahl der Schaltpunkte auch die Kosten für die Programmeinrichtung. Besonders bei langen Vorformlingen ist die Verwendung einer Programmeinrichtung mit einer sehr grossen Anzahl von Schaltpunkten erforderlich, wenn an kurzen Teilbereiches des Vorformlinges ein etwas komplizierteres Wanddickenprogramm zur Anwendung kommt. So sind bei einem 4 m langen Vorformling bei Verwendung einer Programmeinrichtung mit 25 Schaltpunkten, die einen konstanten Abstand voneinander aufweisen, die einzelnen Schaltpunkte etwa 160 mm voneinander entfernt, wenn die Programmeinrichtung in Abhängigkeit von der zunehmenden Länge des Vorformlinges während des Extrusionsvorganges gesteuert wird. Bei Steuerung in Abhängigkeit von der Zeit oder vom Volumen können die Abstände noch beträchtlich grösser sein, da eine Verringerung der Wanddicke und damit eine Verringerung der Spaltbreite bei konstantem Volumendurchgang pro Zeiteinheit zu einer Erhöhung der Austrittsgeschwindigkeit führt. In jedem Fall ist die Ausführung eines komplizierteren Wanddickenprogrammes auf einem Teilabschnitt von 160 mm überhaupt nicht durchführbar, wenn dieser Teilabschnitt zwischen zwei Schaltpunkten liegt. Aber auch bei einem längeren Teilabschnitt von z.B. 400 mm ist ein komplizierteres Wanddickenprogramm nicht anwendbar, da in einem solchen Bereich maximal drei bis vier Schaltpunkte zur Verfügung stehen, die für ein komplizierteres Programm nicht ausreichen. Bei Verwendung einer Programmeinrichtung mit zweihundert Schaltpunkten lägen natürlich wesentlich günstigere Verhältnisse vor, da dann die zwei benachbarten Schaltpunkten entsprechenden Abstände auf dem Vorformling nur 20 mm betragen. Allerdings wäre ein derartiger Programmierer sehr aufwendig, wobei nicht einmal eine Gewähr dafür gegeben wäre, dass alle bezüglich des Wanddickenprogramms gestellten Forderungen optimal erfüllbar sind.

Ein Teil der vorstehend beschriebenen Probleme könnten dadurch vermieden werden, dass die Schaltpunkte nicht in konstanten Abständen, sondern vielmehr einstellbar über eine Strecke, die der bezüglich der Wanddicke zu beeinflussenden Länge des Vorformlinges entspricht, verteilt angeordnet werden können, so dass die Möglichkeit besteht, die Schaltpunkte in den Bereichen zu konzentrieren, in denen zahlreiche Änderungen der Spaltbreite in kurzen Zeitabständen bzw. über einen kurzen Teilabschnitt des Vorformlinges erfolgen. Derartige Programmeinrichtungen sind z.B. durch den Prospekt «Blasformen» der Firma Moog GmbH, v. 21.5.1976 bekannt. Sie weisen jedoch den Nachteil auf, dass das Einstellen einer solchen Programmeinrichtung ausserordentlich schwierig und in vielen Fällen ohne zusätzliche Einrichtungen, die das eingestellte Programm relativ zum Vorformlingsverlauf sichtbar machen, beispielsweise mittels eines Monitors, gar nicht durchführbar ist. Jedenfalls erfordert die Verwendung einer derartigen Programmeinrichtung das Vorhandensein von besonders qualifizierten Fachleuten. Diese Voraussetzung ist in vielen Fällen nicht gegeben. Ausserdem können Schwierigkeiten dadurch entstehen, dass die den einzelnen Schaltpunkten zugeordneten verstellbaren Organe, z.B. Potentiometer, untereinander nicht die Genauigkeit und Gleichheit aufweisen, die bei kleinen Abständen der Schaltpunkte voneinander erforderlich ist, um ein brauchbares Ergebnis zu erzielen.

Der Erfindung liegt die Aufgabe zugrunde, Verfahren und Vorrichtung der eingangs beschriebenen Art so abzuwandeln, dass die vorbeschriebenen Nachteile vermeidbar sind. Insbesondere werden eine grössere Flexibilität und damit Anpassbarkeit an die jeweiligen Anforderungen bezüglich der Programmierung angestrebt, und zwar sowohl hinsichtlich der Auflösung als auch bezüglich einer genauen Bestimmbarkeit der Lage der einzelnen Schaltpunkte auch dann, wenn auf einem sehr kurzen Abschnitt des Vorformlinges bzw. während einer sehr kurzen Dauer des Extrusionsvorganges sehr viel Änderungen der Spaltbreite durchgeführt werden müssen. «Auflösung» bedeutet hierbei, dass auch bei sehr kurzen Abständen der Punkte auf dem Vorformling, an denen eine Änderung des Spaltbreitenverlaufs erfolgt, auf dem Feld der Programmeinrichtung, auf welchem die einzelnen Schaltpunkte eingestellt werden, die Abstände immer noch ausreichend gross sind, um eine gute Übersicht zu ermöglichen. Die dazu benutzte Vorrichtung soll in ihrem Aufbau und in ihrer Handhabung einfach und übersichtlich sein, so dass gegebenenfalls auf dem Markt befindliche Programmeinrichtung in geeigneter Kombination Verwendung finden können.

Diese Aufgabe wird gelöst durch die Merkmale im Kennzeichen des Anspruches 1 und die Merkmale im Kennzeichen des Anspruches 5. Durch Anwendung der Erfindung wird erreicht, dass in einem — oder mehreren — verhältnismässig kurzen Teilabschnitt(en) des Vorformlinges eine hohe Programmauflösung erreicht werden kann, wozu normalerweise einfache Einrichtungen ausreichen, während über den restlichen Bereich des Vorformlinges die Programmierung der Wandstärke in der üblichen Weise und unter Verwendung üblicher Einrichtungen erfolgt. Dabei ist es ohne weiteres möglich, dass die Programmeinrichtung für das zusätzliche Programm bezüglich Aufbau und auch Anzahl der Schaltpunkte der Programmeinrichtung für das erste Programm entspricht.

Wenn beispielsweise angenommen wird, dass für die Herstellung eines Vorformlinges einhundert Einheiten notwendig sind, die als Signalfolgen, beispielsweise als Impulse auf die erste Programmeinrichtung gegeben werden, um das Programm abzurufen, und die Programmeinrichtung fünfundzwanzig feste Schaltpunkte aufweist, erfolgt nach jeweils vier Einheiten — 100:25 — eine neue Einstellung des Wanddickenverlaufs. Mit einer derartigen Programmeinrichtung können kleinere Schritte, d.h. Änderungen des Wanddickenverlaufs innerhalb kürzerer Abstände, nicht durchgeführt werden, so dass ein komplizierteres Programm über einen Teilabschnitt des Vorformlinges, der zehn Einheiten oder Impulsen entspricht, nicht durchführbar ist. Ausserdem besteht, wie bereits erwähnt, die Möglichkeit, dass die Position der Schaltpunkte der ersten Programmeinrichtung nicht der Position der Punkte oder Ebenen am Vorformling entspricht, in welchen Änderungen des Wanddickenverlaufs durchgeführt werden sollen. Da eine Teilung, d.h. die Lage der Schaltpunkte, bei einer Programmeinrichtung mit fünfundzwanzig Schaltpunkten bei 0, 4, 8, 12 usw. ist bzw. liegt, müsste eine beispielsweise bei 10 vorgesehene Änderung des Wanddickenverlaufs entweder bei acht oder zwölf erfolgen.

Die zweite Programmeinrichtung, die beispielsweise ebenfalls fünfundzwanzig Schaltpunkte besitzt, wird demgegenüber nur über einen Teilabschnitt der Gesamtlänge des Vorformlinges wirksam. Wenn angenommen wird, dass die Länge des zu beeinflussenden Teilabschnittes zehn Einheiten oder Impulsen entspricht, ergibt sich ein Abstand zwischen den Schaltpunkten von 10:25=0,4 Einheiten. D.h., dass mit einer sehr grossen Auflösung, also mit einer entsprechenden Genauigkeit, auf einem sehr kurzen Teilabschnitt des Vorformlinges ein sehr kompliziertes Programm aufbringbar ist, wobei ausserdem Anfang und Ende der Änderung des durch die zweite Programmeinrichtung gesteuerten Wanddickenverlaufes praktisch nach Belieben festgelegt werden können. Beim vorgenannten Beispiel könnte der Beginn der Wirksamkeit der zweiten Programmeinrichtung beim Eingang des Impulses 10 beginnen und demzufolge beim Impuls 20 enden, wobei der Impuls 10 nicht einem Schaltpunkt der ersten Programmeinrichtung entspricht.

Es ist möglich, dass das zusätzliche, kürzere Programm zweimal oder mehrmals während des Extrudierens desselben Vorformlinges angewendet wird. Als Beispiel sei die Anwendung der zweiten Programmeinrichtung für den vorderen und den hinteren Endbereich des Vorformlinges genannt.

Normalerweise werden die Werte x und x' der ersten und des zweiten Programms addiert, so dass die Spaltbreite der Summe dieser beiden Werte entspricht. Im übrigen kann auch so verfahren werden, dass das erste Programm im Wirksamkeitsbereich des zweiten Programms keine Änderung der Spaltbreite bewirkt, also so eingestellt ist, dass seine Einstellung einer konstanten Spaltbreite entspricht. Normalerweise wird die Länge des ersten Programms der Länge des Vorformlinges entsprechen.

Bei der erwähnten mehrfachen Anwendung des zweiten Programmes auf denselben Vorformling kann so verfahren werden, dass die von der zweiten Programmeinrichtung jeweils beeinflusste Länge der Teilabschnitte des Vorformlinges unterschiedlich ist, beispielsweise derart, dass bei der ersten Anwendung die Länge des Programmes sich auf zehn, bei der zweiten Anwendung hingegen auf fünfzehn Einheiten oder Impulse verteilt. Entsprechendes gilt auch für das Ausmass der Spaltbreite.

Selbstverständlich besteht auch die Möglichkeit, für mehrere an demselben Vorformling anzuwendende zusätzliche Wanddickenprogramme mehrere zusätzliche Programmeinrichtungen vorzusehen, die unterschiedlich programmiert sind.

Es ist möglich, die zweite Programmeinrichtung(en) in Abhängigkeit von denselben Kenngrössen — beispielsweise Zeit, Volumen des extrudierten Materials, Vorformlingslänge während des Extrusionsvorganges — zu steuern wie die erste Programmeinrichtung. Es kann aber auch zweckmässig sein, erste Programmeinrichtung und zweite Programmeinrichtung in Abhängigkeit von unterschiedlichen Kenngrössen zu steuern, beispielsweise derart, dass die erste Programmeinrichtung in Abhängigkeit vom Volumen und die zweite Programmeinrichtung in Abhängigkeit von der während des Extrusionsvorganges zunehmenden Vorformlingslängen gesteuert werden. Dies kann dann zweckmässig sein, wenn es darum geht, den Einfluss von Geschwindigkeitsänderungen möglichst gering zu halten, die durch Änderungen der Spaltbreite der Austrittsöffnung verursacht werden.

In der Zeichnung ist ein Ausführungsbeispiel der Erfindung dargestellt. Es zeigen:

Fig. 1 im Schema eine Vorrichtung zum Herstellen von Hohlkörpern aus thermoplastischem Material im Blasverfahren einschliesslich zugehöriger Programmeinrichtungen für die Steuerung der Wanddicke des Vorformlinges,

Fig. 2a-2c, 3a und 3b Diagramme, die die Beeinflussung der Wanddicke des Vorformlinges über dessen Länge durch erste Programmeinrichtung und zweite Programmeinrichtung erkennen lassen.

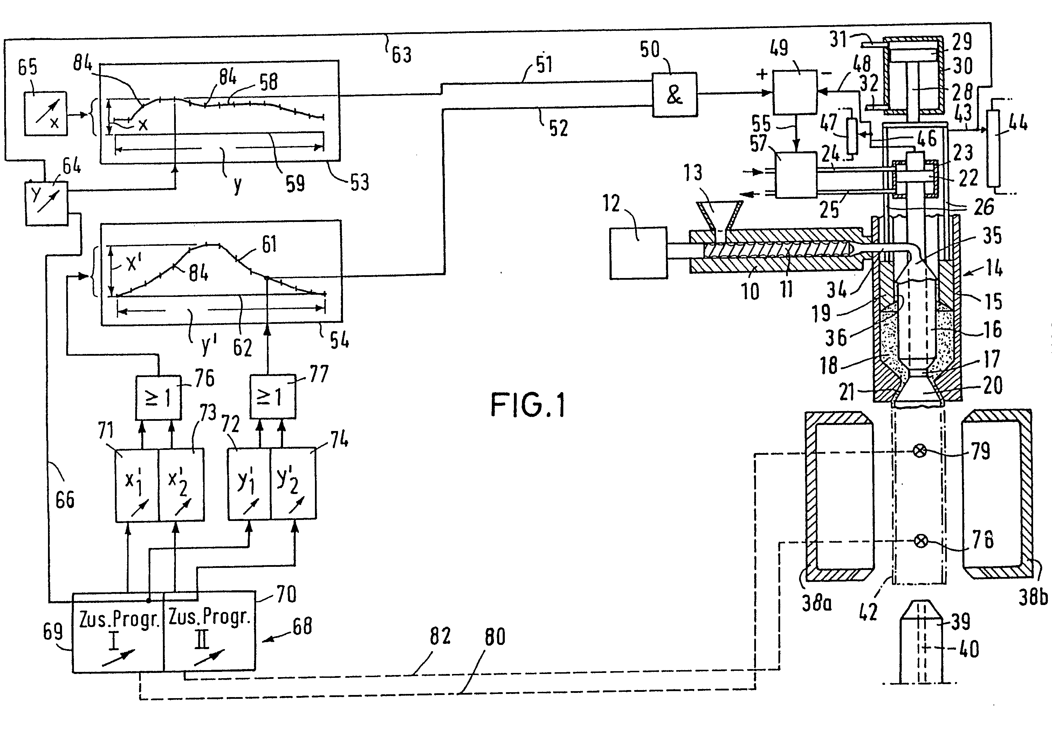

Die in Fig. 1 der Zeichnung im Schema dargestellte Vorrichtung weist einen Extruder 10 auf, dessen Schnecke 11 durch einen Motor 12 angetrieben wird. Das thermoplastische Material wird dem Extruder 10 über einen Trichter 13 zugeführt. Dem Extruder 10 ist ein Strangpresskopf 14 nachgeordnet, der im wesentlichen aus einem Gehäuse 15, einem stationären Dorn 16, einem darin axial verschiebbar angeordneten Kern 17, einem Speicherraum 18 sowie einem Ringkolben 19 besteht, der ebenfalls axial hin- und herverschiebbar ist. Der Kern 17 trägt an seinem unteren Ende eine konisch ausgebildete Verdickung 20, die die innere Begrenzung einer ringspaltförmigen Austrittsöffnung 21 darstellt. Die aussenseitige Begrenzung der Austrittsöffnung 21 wird durch den unteren Bereich des Gehäuses 15 gebildet, das mit einer Öffnung versehen ist, innerhalb derer sich unter Belassung der Austrittsöffnung 21 die Verdickung 20 befindet. Die Zeichnung lässt erkennen, dass eine axiale Verschiebung des Kernes 17 und damit des verdickten Bereiches 20 eine Vergrösserung oder Verkleinerung des Ringspaltes 21 zur Folge hat. An seinem oberen Endbereich ist der Kern 17 mit einem Kolben 22 versehen, der innerhalb eines Zylinders 23 geführt ist. Die Zu- und Ableitungen für das normalerweise hydraulische Druckmittel sind mit 24 und 25 bezeichnet. Der Kolben 19 ist mittels über seinen Umfang verteilt angeordneter Bolzen 26 oder dgl. mit der Kolbenstange 28 eines Kolbens 29 verbunden, der in einem Zylinder 30 verschiebbar angeordnet ist. Zu- und Ableitungen 31 und 32 sind für das im allgemeinen hydraulische Druckmittel vorgesehen.

Das Gehäuse 15 des Strangpresskopfes 14 ist damit einer Eintrittsöffnung 34 für das thermoplastische Material versehen, das über zwei einander gegenüberliegende, sich nach unten verbreiternde Kanäle 35 in eine ringförmige Querschnittsform gebracht wird und über den Zwischenkanal 36 in den Speicherraum 18 strömt und dabei den Kolben 19 nach oben verschiebt. Die Konstruktion des Strangpresskopfes kann insoweit mit dem Gegenstand der DE-A Nr. 1704791 und dem der US-A Nr. 3611494 übereinstimmen, wenngleich dies für die Anwendung der Erfindung nicht erforderlich ist.

Unterhalb des Strangpresskopfes 14 ist eine aus zwei Formhälften 38a, b bestehende Blasform angeordnet, der eine Blasdüse 39 zugeordnet ist. Letztere dient der Zufuhr eines Druckmittels über eine Bohrung 40 in die Blasform 38a, b und einen darin befindlichen Vorformling hinein.

Die Vorrichtung arbeitet in der Weise, dass das im normalerweise kontinuierlich laufenden Extruder 10 plastifizierte Material zunächst durch die Kanäle 35 und den Zwischenkanal 36 in den ringförmigen Speicherraum 18 gebracht wird, wobei mit fortschreitender Füllung des Speicherraumes 18 der Kolben 19 nach oben bis zum Erreichen einer oberen, in der Zeichnung dargestellten – einstellbaren – Endlage verschoben wird. Sobald der Kolben 19 seine obere Endlage erreicht hat, wird über bekannte Mittel der Kolben 29 durch die Leitung 31 beaufschlagt mit dem Ergebnis, dass der Kolben 19 nach unten in seine einstellbare untere Endlage bewegt wird. Dabei wird das im Speicherraum 18 befindliche thermoplastische Material durch die Austrittsöffnung 21 in Gestalt eines schlauchförmigen Vorformlinges 42 in den Bereich zwischen den beiden Formhälften 38a, b hinein ausgepresst. Die Blasform 38a, b ist zu diesem Zeitpunkt zumindest teilweise geöffnet. Danach wird – ausgelöst durch einen Steuerimpuls, der bei Eintreffen des Kolbens 19 in dessen unterer Endlage erzeugt wird – die Blasform 38a, b um den Vorformling 42 geschlossen, nachdem oder bevor der Blasdorn 39 in das untere Ende des Vorformlinges 42 eingeschoben worden ist bzw. wird. Alsdann wird der Vorformling 42 aufgeweitet. Es ist selbstverständlich auch möglich, die Zuführung für das Druckmittel anders auszubilden und/oder an einer anderen Stelle, beispielsweise oberhalb der Blasform 38a, b anzuordnen. Alle diese Möglichkeiten und Massnahmen sind bekannt, so dass sie nicht näher beschrieben zu werden brauchen.

Nach dem Aufweitvorgang bleibt der resultierende Hohlkörper noch für eine bestimmte Zeitspanne, die für eine ausreichende Abkühlung und Verfestigung des thermoplastischen Materials benötigt wird, innerhalb der Blasform 38a, b. Der fertige Hohlkörper, an dem sich noch einige Abfallteile befinden können, wird aus der Blasform 38a, b entfernt, so dass letztere nunmehr für die Aufnahme des nächsten Vorformlinges 42 bereit ist. Diese Situation ist in Fig. 1 der Zeichnung dargestellt, wobei jedoch die beiden Formhälften 38a, b bereits einen Teil des Schliessweges zurückgelegt haben.

Dem Kolben 19 ist ein Positionsanzeiger 43 zugeordnet, der mit einem Positionsgeber 44 zusammenwirkt. Letzterer ist als Potentiometer ausgebildet. Ein weiterer Positionsanzeiger 46 ist dem Kern 17 und damit dem den Austrittsspalt 21 innenseitig begrenzenden konischen Fortsatz des Kernes 17 zugeordnet. Dieser Positionsanzeiger wirkt mit einem z.B. als Potentiometer ausgebildeten Positionsgeber 47 zusammen, der über eine Leitung 48 mit einer Vergleichs- und Regeleinrichtung 49 verbunden ist. Letztere ist unter Zwischenschaltung eines Addiergliedes 50 über Leitungen 51 und 52 mit Programmierern 53 bzw. 54 verbunden.

Das Vergleichs- und Regelglied 49 erhält über die Leitung 48 den Ist-Wert bezüglich der Breite des Spaltes 21 vom Positionsanzeiger 47. Der Soll-Wert wird vom Addierglied 50 geliefert. Über eine Leitung 55 besteht eine Verbindung mit einem Servoventil 57, welches in die mit dem Zylinder 23 verbundenen Leitungen 24 und 25 eingeschaltet ist.

In beiden Programmierern 53 bzw. 54 ist ein bestimmtes Programm hinsichtlich der Verteilung der Wanddicke des Vorformlinges 42 in Längsrichtung desselben eingestellt. Zur Verdeutlichung des Sachverhaltes sind in beiden Programmierern jeweils zwei Linien 58 und 59 bzw. 61 und 62 eingezeichnet, die jeweils Breiten des Austrittsspaltes 21 zu einem bestimmten Zeitpunkt während der Extrusion des Vorformlinges 42 entsprechen. Die Linien 58 und 61 geben dabei jeweils den Verlauf der Spaltbreite zwischen zwei aufeinanderfolgenden Schaltpunkten 84 an. Somit entspricht der Abstand x der Linie 58 von der Grundlinie 59 bzw. der Abstand x' der Linie 61 von der Grundlinie 62 jeweils der Breite bzw. einem Teil der Breite des Austrittsspaltes 21, wobei in dem Bereich, in welchem beide Programmierer 53 und 54 gleichzeitig wirksam sind, die jeweiligen Werte x und x' beider Programmeinrichtungen addiert werden. Ferner entspricht der Wert y des Programmierers 53 der Länge des Vorformlinges 42, so dass die Kurve 58 der Wanddickenverteilung am Vorformling über dessen Gesamtlänge entspricht. Der Wert y' des Programmierers 54 hingegen entspricht nur einem Teilabschnitt des Vorformlinges.

Der Ausstosshub des Kolbens 19 zur Bildung des Vorformlinges 42 ist einstellbar. Wenn beispielsweise die für die Herstellung eines Vorformlinges 42 benötigte Materialmenge kleiner ist als das maximale Speichervolumen des Speicherraumes 18, wird der Kolben 19 zwischen zwei Endpositionen hin- und herbewegbar sein, die einen kürzeren Abstand voneinander aufweisen als die beiden extremen Endpositionen, die der maximalen Speichermöglichkeit im Speicherraum 18 entsprechen. Die vom Positionsanzeiger 43 beim Ausstosshub zurückgelegte Wegstrecke hängt ab von der Grösse des Hubes. Sie wird zur Länge y des Programmierers 53 in Beziehung gesetzt. Die Länge y' des Programmierers 54 kann zu wenigstens einem Teilabschnitt des Vorformlinges 42 in Beziehung gesetzt werden, dessen Länge jedoch unabhängig sein kann von der Gesamtlänge des Vorformlinges. Normalerweise wird der zweite Programmierer 54 dazu verwendet, auf einen oder mehrere bestimmte Längsabschnitte des Vorformlinges 42, die sehr kurz sein können, ein zusätzliches Wanddickenprogramm aufzubringen. Dies bedeutet im Ergebnis, dass, wenn der Programmierer 54 über die Strecke y' mit z.B. fünfundzwanzig in gleichen Abständen voneinander befindlichen Schaltpunkten versehen ist, diese fünfundzwanzig Punkte sich am zugeordneten Abschnitt des Vorformlinges auf eine sehr kurze Strecke verteilen, die sehr viel kleiner sein kann als die der Länge y' entsprechende Abmessung auf dem Anzeige- und Manipulierfeld des Programmierers 54, auf welchem das jeweilige Wanddickenprogramm durch Einstellung des Wertes x' der einzelnen Punkte 84 zusammengestellt wird. D.h., dass die Handhabbarkeit des Programmierers in bezug auf die Einstellung der einzelnen Schaltpunkte in jedem Fall erhalten bleibt, unabhängig davon, wie dicht die einzelnen Schaltpunkte an dem durch dieses zweite Programm beeinflussten Teilabschnitt des Vorformlinges beieinanderliegen.

Die Tatsache, dass die Länge y' des zweiten Programmierers normalerweise nur einem sehr kurzen Teilabschnitt des Vorformlinges entspricht, gibt die Möglichkeit, den zweiten Programmierer 54 während der Extrusion desselben Vorformlinges 42 mehr als einmal anzuwenden, also beispielsweise an dem einen Endabschnitt und an dem anderen Endabschnitt des Vorformlinges. Dabei bleibt das einmal festgelegte Programm bezüglich der relativen Lage x' der einzelnen Programmpunkte zueinander und ihrer Verteilung über die Länge y' unverändert. Jedoch besteht die Möglichkeit, die Länge y' unterschiedlich langen Teilabschnitten des Vorformlinges zuzuordnen. D.h., dass bei der zweiten Benutzung des Programmierers 54 am selben Vorformling die Länge des durch die Strecke y' beeinflussten Vorformlingabschnittes kürzer oder länger sein kann als bei der ersten Anwendung. Entsprechendes gilt auch für den Wert x' der Punkte 84. Zwar bleiben die relativen Veränderungen der Spaltbreite zwischen den einzelnen Schaltpunkten 84 unverändert; das absolute Ausmass kann jedoch bei der zweiten Anwendung anders sein. Im Ergebnis bedeutet dies, dass x' und y' in Abhängigkeit von den jeweiligen Erfordernissen gespreizt oder verengt werden können, wobei dies im Falle y' bedeutet, dass die dem Abstand zwischen zwei benachbarten Schaltpunkten 84 entsprechende Anzahl von Einheiten oder Impulsen kleiner oder grösser wird.

Bei dem in Fig. 1 der Zeichnung dargestellten Ausführungsbeispiel wird das im Programmierer 53 eingestellte Programm in Abhängigkeit vom Ausstosshub des Kolbens 19 abgefahren. Diese Abhängigkeit wird über die Leitung 63 hergestellt, die einerseits mit dem Positionsgeber 44 und andererseits unter Zwischenschaltung eines Anpassungsgliedes 64 mit dem Programmierer 53 verbunden ist. Das Anpassungsglied 64 dient dazu, die Strecke y des Programmierers 53 an die jeweilige Hublänge des Kolbens 19 anzupassen, dass die Länge y des Programmfeldes der Wegstrecke entspricht, über die der Positionsanzeiger 43 entlang dem Positionsgeber 44 bewegt wird.

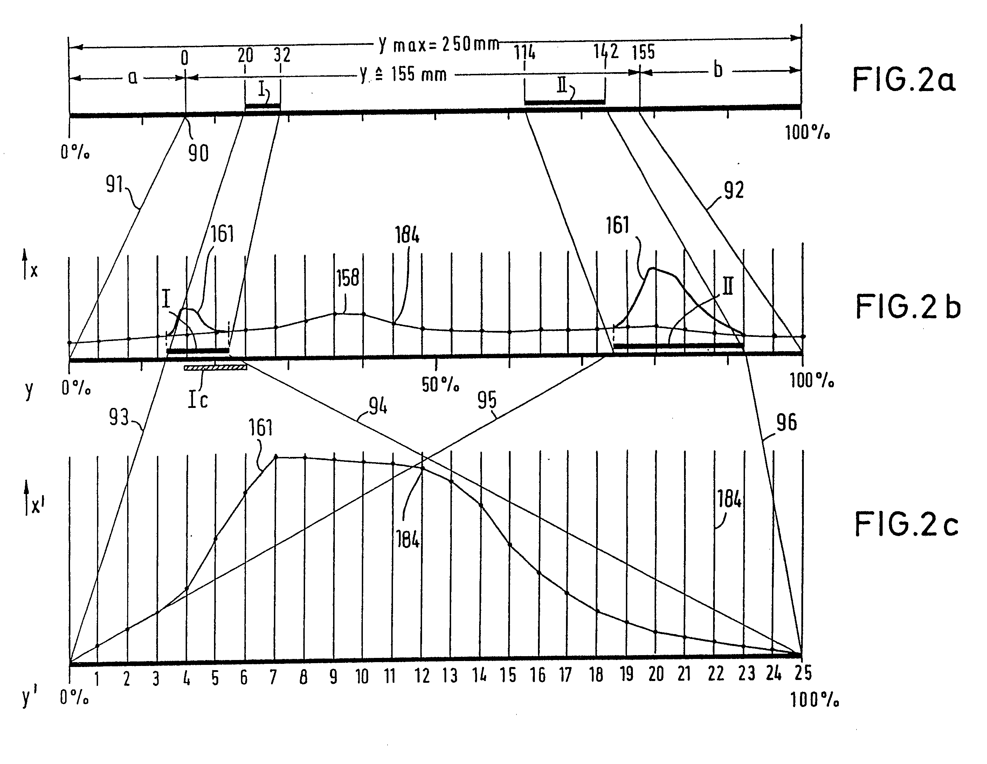

Diese Zusammenhänge werden im folgenden anhand der Fig. 2a-2c erläutert.

Es wird davon ausgegangen, dass durch das Zusammenwirken von Positionsanzeiger 43 und Positionsgeber 44 im Verlauf des Kolbenhubes, bei dem aus dem Speicherraum 18 zur Herstellung eines Vorformlinges 42 Material durch den Kolben 19 ausgepresst wird, eine Vielzahl von Impulsen in gleichen Abständen durch die Leitung 63 auf den Programmierer 53 gegeben wird, wobei die Anzahl der Impulse bei einem maximalen Kolbenhub von beispielsweise 250 mm 250 betragen soll. Mithin wird bei diesem Beispiel 1 Impuls pro 1 mm Kolbenhub auf den Programmierer 53 gegeben, so dass bei maximalem Kolbenhub der Impuls 1 dem Anfang und der Impuls 250 dem Ende des Kolbenhubes zugeordnet sind. Dies bedeutet weiterhin, dass Impuls 1 den Anfang und Impuls 250 das Ende der Strecke y des Programmierers 53 definiert unter der Voraussetzung, dass die Programmlänge y dem maximalen Kolbenhub entspricht. Der maximale Kolbenhub ist in Fig. 2a mit $y_{max}$. bezeichnet, wobei in der Darstellung oben die Länge des Kolbenhubes in Millimeter und unter die Länge der Programme in Prozent des maximalen Kolbenhubes angegeben sind.

Bei dem in den Fig. 2a-2c dargestellten Beispiel wird weiterhin angenommen, dass zur Herstellung eines bestimmten Vorformlinges 42 der Kolben 19 nur einen Teil des maximal möglichen Weges von 250 mm zurücklegt, und zwar zwischen Endpositionen, die den Impulsen 40 und 195 von $y_{max}$. bzw. den Punkten 40 mm und 195 mm des maximalen Kolbenhubes entsprechen. D.h., dass bei der Herstellung dieses bestimmten Vorformlinges der Punkt 40 der Darstellung gemäss Fig. 2a den oberen und der Punkt 195 den unteren Umkehrpunkt des Kolbens 19 definieren. Die Strecken a (0-40) und b (195-250) werden somit bei der Herstellung dieses Vorformlinges 42 vom Kolben 19 nicht durchfahren. Daraus ergibt sich, dass insgesamt nur $250-(a+b)=155$ Impulse während des Ausstosshubes durch die Leitung 63 auf den Programmierer 53 gegeben werden.

Dies bedeutet, dass die Strecke y des Programmierers 53 für die Herstellung dieses Vorformlinges der Wegstrecke entsprechen muss, die ihrerseits 155 Impulse bzw. 155 mm Kolbenhub entspricht. Oder, anders ausgedrückt, dass die Wegstrecke von 155 mm entsprechend 155 Impulsen die Länge y des Programmfeldes des Programmierers 59 ausfüllt. Diese Anpassung der Strecke y des Programmierers 53 an die tatsächliche Länge des vom Kolben 19 ausgeführten Hubes und damit die Wegstrecke, die vom Positionsanzeiger 43 zurückgelegt wird, erfolgt über das Anpassungsglied 64.

Entsprechend kann auch der Wert x, der die Spaltbreite der Austrittsöffnung 21 bestimmt, über das Anpassungsglied 65 im Bedarfsfall bei ansonsten gleichbleibender Anordnung der Schaltpunkte 84 variiert werden, indem z.B. durch Vergrösserung des x-Wertes eine Spreizung des Programmes in x-Richtung erfolgt.

Die über die Leitung 63 vom Positionsgeber 44 kommenden Signale werden, nachdem sie im Anpassungsglied 64 der erforderlichen Programmlänge y angepasst worden waren, weiterhin über eine Leitung 66 in eine Starteinrichtung für den Programmierer 54 geleitet. Als Beispiel wird angenommen, dass dessen Programm während des Extrudierens eines Vorformlinges 42 zweimal benutzt wird. Somit ist die Starteinrichtung 68 mit zwei Startelementen 69 für die erste Anwendung und 70 für die zweite Anwendung versehen. Jedem der beiden Startelemente 69 bzw. 70 ist jeweils ein Anpassungsglied 71 und 72 bzw. 73 und 74 für die x'- und y'-Werte der Schaltpunkte 84 des Programmierers 54 zugeordnet. Die Funktion dieser Glieder entspricht jenen der Glieder 64 und 65 des Programmierers 53. Ferner ist zwischen x'-Eingang einerseits und y'-Eingang andererseits des Programmieres 54 jeweils ein Oder-Glied 76 bzw. 77 geschaltet, dessen Funktion darin besteht, nur die zum jeweiligen Anwendungsfall gehörenden Signale passieren zu lassen.

Bei dem hier beschriebenen Ausführungsbeispiel soll die erste Anwendung des Programmierers 54, die im folgenden als Zusatzprogramm I bezeichnet wird, zwölf Impulse dauern und beim Impuls 20 des im folgenden als Basisprogramm bezeichneten Programmes des Programmierers 53 beginnen und beim Impuls 32 des Basisprogrammes enden. Die zweite Anwendung des Programmierers 54, die als Zusatzprogramm II bezeichnet wird, soll achtundzwanzig Impulse dauern und beim Impuls 114 des Basisprogrammes beginnen und somit bei einem Impuls 142 des Basisprogrammes enden. D.h., dass die Programmdauer beim Zusatzprogramm II mehr als doppelt so lang ist wie beim Zusatzprogramm I und demzufolge auch y' beim Zusatzprogramm II mehr als doppelt so lang ist wie beim Zusatzprogramm I.

Zur Vermeidung von Missverständnissen sei darauf hingewiesen, dass die Zählung der vorstehend angegebenen Impulse jeweils am Anfang 90 (Fig. 2a) des 155 Impulse bzw. Millimeter dauernden Programmes gemäss Länge y erfolgt. D.h., dass die Strecke a des maximal möglichen Kolbenhubes, die bei dem hier als Beispiel angenommenen Programm nicht gefahren wird, bei der Zählung unberücksichtigt bleibt.

Zur Verdeutlichung des Sachverhaltes ist in Fig. 2b die Strecke y=155 mm bzw. Impulse, die weniger als 100% des maximal möglichen Kolbenhubes beträgt, als y=100% gesetzt, also =100% der Länge des Programmierfeldes. In Fig. 2b sind weiterhin die Schaltpunkte 184 des Programmierers dargestellt, wobei jedoch — abweichend von der Darstellung der Fig. 1 — ein Programmierer mit fünfundzwanzig Schaltpunkten 184 angenommen ist. Durch die Fig. 2a und 2b verbindende Linien 91 und 92 werden jeweils Anfang und Ende der Programmlänge y in den Fig. 2a und 2b in Beziehung zueinander gesetzt. Aus der Darstellung dieser beiden Figuren ergibt sich, dass jede Programmlänge y, die kürzer ist als y maximal durch das Angleichungsglied 64 auf die vorgegebene Länge y des Programmierers 69 gespreizt wird, so dass der Abstand der den Schaltpunkten 84 bzw. 194 der Programmierer entsprechenden Punkten auf dem Vorformling mit kürzer werdendem Vorformling abnimmt. Damit ist — zumindest theoretisch — eine Zunahme der Genauigkeit verbunden, mit der das Wandstärkenprogramm bei einer gegebenen Anzahl von Schaltpunkten eingestellt werden kann, deren Abstände voneinander im Programmierer nicht variierbar sind.

Dieser Effekt, also die zunehmende Genauigkeit der Einstellbarkeit des Wandstärkenprogramms beispielsweise gemäss Kurve 158 in Fig. 2b wird durch die Erfindung ausgenutzt, da davon ausgegangen wird, dass das Zusatzprogramm des Programmierers 54 auf Abschnitten des Vorformlinges zur Anwendung kommt, die wesentlich kürzer sind als die Gesamtlänge des Vorformlinges. Dies wird insbesondere bei einem Vergleich der Fig. 2b und 2c deutlich. In letzterer ist der Verlauf 161 der Zusatzprogramme I und II dargestellt. Da der Ab-

stand der Schaltpunkte 84 bzw. 184 im Programmierer 54 der gleiche ist wie der Abstand der Schaltpunkte im Programmierer 53, erfolgt eine sehr starke Auflösung des Verlaufs 161 der Zusatzprogramme I und II, wie insbesondere die jeweils Anfang und Ende der Zusatzprogramme I und II mit Anfang und Ende von y' verbindenden Linien 93, 94 sowie 95 und 96 erkennbar machen. Das Zusatzprogramm I entspricht der Dauer von zwölf Impulsen bzw. einer Hublänge von 12 mm gleich 100% der Länge y'.

Im Zusatzprogramm II ist die Auflösung etwas geringer, da hier eine Dauer von achtundzwanzig Impulsen bzw. eine Hubstrecke von 28 mm gleich Gesamtlänge, also 100% von y' wird. Trotzdem ist auch hier noch die Auflösung ausserordentlich gross, da bei 25 Schaltpunkten immer noch nahezu ein Schaltpunkt auf 1 mm Kolbenhub des vom Zusatzprogramm II zu beeinflussenden Vorformlingsabschnittes entfällt. Beim Zusatzprogramm I entfallen sogar mehr als zwei Schaltpunkte 184 auf 1 mm Kolbenhub.

Bei der Herstellung des Vorformlinges 42 wird zu Beginn des Ausstosshubes des Kolbens 19 zunächst lediglich das Programm des Programmierers 53 gemäss Kurve 58 oder 158 abgefahren, bis der 20., über die Leitungen 63 und 66 kommende Impuls den Start über das Startelement 69 für das Zusatzprogramm I frei gibt. Nunmehr wird zusätzlich zum Programm gemäss Kurve 158 (Fig. 2b) des Programmierers 53 das Programm gemäss Kurve 161 über die Länge y' entsprechend 12 Impulse abgefahren. Die von beiden Programmierern 53 und 54 kommenden Kenngrössen x bzw. x' werden im Addierglied 50 addiert und der Regeleinrichtung 49 eingegeben, die die über Positionsanzeiger 46 und Positionsgeber 47 eingegebene tatsächliche Lage des Kernes 17 bzw. des Fortsatzes 20 desselben mit dessen Soll-Lage, die sich aus der Position des Kolbens 19 und dem Summensignal der Programmierer 53 und 54 ergibt, vergleicht. Bei Abweichungen der Ist-Lage von der Soll-Lage werden entsprechende Signale auf das Servoventil 57 gegeben, die zu einer Änderung der Position bzw. der Bewegung des Kernes 17 und damit der Breite des Spaltes führen, der die Austrittsöffnung 21 bildet.

Zu Beginn des Extrusionsvorganges, also bis zum Erreichen des Impulses 20, erfolgt diese Regelung ausschliesslich durch den Programmierer 53.

Fig. 2b zeigt im Bereich des Zusatzprogrammes I den Verlauf 161 desselben, der auf den Verlauf des Basisprogrammes 158 aufgesetzt ist. Im Ergebnis wird die sich aus dem Zusatzprogramm ergebende Spaltbreite der Austrittsöffnung 21 zu der des Basisprogrammes addiert. Fig. 2b lässt darüber hinaus erkennen, dass die fünfundzwanzig Schaltpunkte des Zusatzprogrammes sich über einen Längenbereich y' erstrecken, der nur etwa zweimal grösser ist als die Teillänge von y des Basisprogrammes, die dem Abstand zwischen zwei aufeinanderfolgenden Schaltpunkten 184 des Programmierers 53 entspricht.

Nachdem der Kolben 19 im Zuge seines Ausstosshubes eine Position erreicht hat, die dem Impuls 32 entspricht, ist das Ende des Zusatzprogrammes I erreicht, so dass bis zum Eintreffen des Impulses 114 bzw. Erreichen des Punktes 114 mm im Zuge des genutzten Kolbenhubes die Breite des Spaltes 21 wiederum ausschliesslich vom Programmierer 53 in der bereits beschriebenen Weise gesteuert wird. Mit Eintreffen des Impulses 114 wird über das Startelement 70 der Zusatzprogrammierer 54 mit dem Zusatzprogramm II eingeschaltet, das über die nächsten achtundzwanzig Impulse bis zum Eintreffen des Impulses 142 abgefahren wird. Die Tatsache, dass das Zusatzprogramm II eine grössere Länge y' aufweist als das Zusatzprogramm I, war bereits erwähnt worden.

Die x-Werte der einzelnen Schaltpunkte 184 werden beim Durchfahren des Zusatzprogrammes II vergrössert. Aufgrund der erwähnten Vergrösserung von y' sind jedoch die Anstiege und Abstiege zwischen zwei aufeinanderfolgenden Schaltpunkten 184 und damit auch die Geschwindigkeiten, mit der die Spaltänderungen erfolgen, im Falle des Zusatzprogrammes II etwa gleich der des Zusatzprogrammes I. Nach Eintreffen des Impulses 142 bis zum Ende des programmierten Ausstossvorganges beim Impuls 155 werden Breite des Spaltes 21 und somit Wandstärke des Vorformlinges wiederum ausschliesslich durch das Basisprogramm des Programmierers 53 gesteuert.

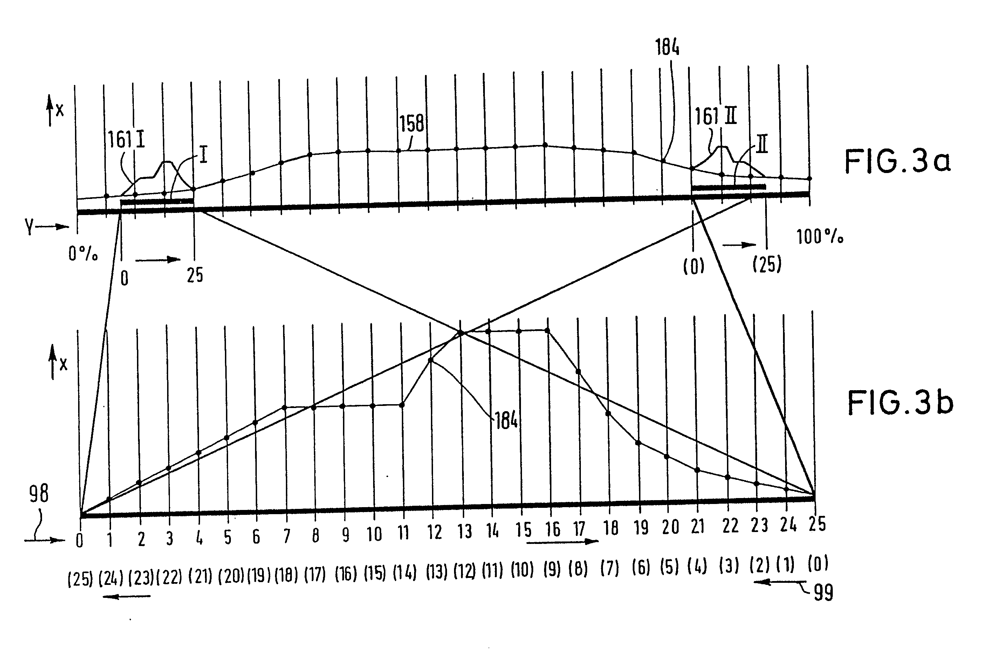

Beim Ausführungsbeispiel gemäss den Fig. 3a und 3b, die den Fig. 2b und 2c entsprechen, wird ebenfalls davon ausgegangen, dass das Zusatzprogramm vom Basisprogramm zweimal überlagert wird, jedoch mit dem Unterschied, dass die absoluten Werte von y' und x' in beiden Zusatzprogrammen gleich sind, das Zusatzprogramm II jedoch spiegelbildlich zum Zusatzprogramm I ausgebildet ist. Im Ergebnis bedeutet dies, dass das Programm II entlang der y'-Linie in umgekehrter Richtung abgefahren wird. Eine derartige Verfahrensweise kann in sehr vielen Fällen zweckmässig sein, in denen eine bestimmte Voraussetzung für eine bestimmte Wandstärkenverteilung einem aus dem Vorformling herzustellenden Hohlkörper zweimal vorkommt, wobei jedoch die beiden Bereiche dieser bestimmten Wandstärkenverteilung spiegelbildlich zueinander angeordnet sind. Ein typisches Beispiel dafür kann ein fassähnlicher Hohlkörper sein, der an beiden Enden einen Übergang zwischen Mantel und jeweils einem Boden aufweist. In vielen Fällen werden die Wandstärkenverhältnisse an beiden Übergängen spiegelbildartig gleich sein. Entsprechend muss auch die Wandstärkenverteilung an dem Vorformling sein, aus welchem dieses Fass in einer Blasform hergestellt wird.

Im konkreten Anwendungsfall heisst das, dass bei der ersten Anwendung des Zusatzprogrammes, also bei Anwendung des Zusatzprogrammes I, die der Länge des Zusatzprogrammes entsprechende Strecke y' in der Darstellung der Fig. 3b von links nach rechts, also in Richtung des Pfeiles 98 abgefahren wird, bis am Ende der fünfundzwanzigste Schaltpunkt 184 erreicht wird. Nach Beendigung des Zusatzprogrammes I wird dann die Wandstärkenverteilung ausschliesslich nach dem Basisprogramm gemäss Kurve 158 der Fig. 3a gesteuert, bis jener Impuls bzw. jene Stellung des Kolbens 19 im Zuge des Ausstosshubes erreicht wird, bei welchem bzw. in welcher das Zusatzprogramm II beginnt. Fig. 3a lässt erkennen, dass dessen Verlauf gemäss Kurve $161_{II}$ dem Verlauf der Kurve $161_I$ des Zusatzprogrammes I entspricht, jedoch in spiegelbildlicher Umkehr. D.h., dass bei Beginn des Wirksamwerdens des Zusatzprogrammes II die Strecke y' des Zusatzprogrammes in umgekehrter Richtung gemäss Pfeil 99 abgenommen wird.

Bei der vorstehenden Erläuterung der Ausführungsbeispiele wird davon ausgegangen, dass sowohl der Start des Programmierers 53 für das Basisprogramm als auch der des Programmierers 54 für die Zusatzprogramme in Abhängigkeit vom Entleerungshub des Kolbens 19 bewirkt werden. Auch das Abnehmen der Programme von den Programmierern erfolgt über die vom Positionsanzeiger 43 bewirkte Impulsfolge in Abhängigkeit vom Ausstosshub des Kolbens 19. Es besteht aber auch die Möglichkeit, den Start der Programme und deren Ablauf in Abhängigkeit von der Zeit zu bewirken. Dies gilt insbesondere für die Zusatzprogramme. Eine andere Möglichkeit besteht darin, im Bewegungsbereich des Vorformlinges 42 zwei Lichtschranken anzuordnen, die in der Zeichnung durch zwei Fotozellen 79 und 78 angedeutet sind. Sobald der Vorformling 42 mit seinem freien Ende im Zuge des Extrusionsvorganges die Fotozelle 79 erreicht hat, gibt diese über eine Leitung 80 einen Impuls auf das Startelement 69, um das Ingangsetzen des Programmierers 54 zwecks Abwicklung des Zusatzprogrammes I zu bewirken. Die Abnahme des Programms vom Programmierer 54 über die Leitung 52 kann dabei wiederum zeitabhängig oder aber in der bereits beschriebenen Weise über Impulse oder andere Signale erfolgen, die über die Leitungen 63 und 66 zugeführt werden. Entsprechendes gilt auch für das Zusatzprogramm II, dessen Start durch die Fotozelle 78 über eine Leitung 82 bewirkt wird, sobald das freie Ende des Vorformlinges 42 während des Extrusionsvorganges die Fotozelle 78 beeinflusst.

Ein wesentlicher Vorteil der Erfindung sei im folgenden anhand der Fig. 2b erläutert. Es ist häufig beim Einstellen einer Extrusions-Blasmaschine erforderlich, dass zwecks Erreichen der angestrebten Wanddickenverteilung der Programmierer 53 für das Basisprogramm mehrfach verstellt werden muss, bevor die richtige Wandstärkenverteilung über die Länge des Vorformlinges erreicht wird. Wenn bei einem mit z.B. fünfundzwanzig Schaltpunkten versehenen Programmierer unterstellt wird, dass nach Einstellung sämtlicher fünfundzwanzig Schaltpunkte sich die Notwendigkeit herausstellt, noch Änderungen an beispielsweise zwei Schaltpunkten vorzunehmen, die kurz vor Beendigung des Extrudierens des Vorformlinges wirksam werden, dann hat diese Änderung, die lediglich eine Vergrösserung oder Verkleinerung der x-Werte zur Folge hat, die Wirkung, dass alle anderen darunter liegenden, den während des Extrusionsvorganges bereits wirksam gewordenen Schaltpunkten entsprechenden Punkte auf dem Vorformling eine Änderung ihrer Position entlang der Längsachse des Vorformlinges in der einen oder anderen Richtung erfahren. Dies ist jedenfalls bei volumenabhängiger und zeitabhängiger Steuerung des Wanddickenprogramms unvermeidbar, da eine Änderung von x-Werten und damit der Spaltbreite der Austrittsöffnung 21 auch immer eine Änderung der Austrittsgeschwindigkeit des Vorformlinges zur Folge hat, so dass pro Zeiteinheit oder Volumeneinheit ein längerer oder kürzerer Schlauchabschnitt als vor dieser Änderung aus dem Spritzkopf austritt. Das bedeutet, dass eine Änderung von Schaltpunkten gegebenenfalls zu der Notwendigkeit führt, auch alle anderen Schaltpunkte, die während des Extrusionsvorganges zeitlich vor einem geänderten Schaltpunkt liegen, zu ändern, um bei einem bereits eingestellten Programm die durch eine nachträgliche Änderung der Einstellung eines Schaltpunktes sich zwangsläufig ergebenden Änderungen der Positionen der einzelnen Wandstärken entlang der Längsachse des Vorformlinges kompensieren. Dies kann eine sehr zeitaufwendige und mühevolle Arbeit sein, die ohnehin nur von einem Fachmann ausgeführt werden kann.

Bei Anwendung der Lehre gemäss der Erfindung werden diese Schwierigkeiten beseitigt oder doch so weitgehend verringert, dass sie keine praktische Bedeutung mehr haben.

In Fig. 2b ist unterhalb des Balkens y das Zusatzprogramm I als Balken schraffiert dargestellt und mit Ic bezeichnet. Es soll sich dabei um eine korrigierte Lage des Zusatzprogrammes I handeln, das oberhalb des Balkens y ausgezogen dargestellt ist. D.h., dass die nachträgliche Korrektur des Zusatzprogrammes I von der ausgezogen in die schraffiert dargestellte Position das Zusatzprogramm um etwa den halben Abstand zwischen zwei benachbarten Schaltpunkten 184 des Basisprogrammes nach rechts verschob. Dazu ist lediglich eine Änderung des Startpunktes von y' erforderlich.

Die Signalfolgen, die auf die Programmeinrichtungen gegeben werden, können als digitale Signale, wie z.B. die vorerwähnten Impulse, aber auch als analoge Signale, beispielsweise Spannungsdifferenzen, ausgebildet sein.

Wie bereits erwähnt, können als Dimension der vorerwähnten Impulse oder anderer Einheiten für die Herstellung eines Vorformlinges die Zeit, die Wegstrecke des den Speicherraum entleerenden Kolbens oder die Länge des Vorformlinges selbst oder ein anderer, davon abgeleiteter Parameter, verwendet werden.

Schliesslich sei noch darauf hingewiesen, dass eine Verkürzung oder eine Verlängerung des Entleerungshubes des Kolbens 19 normalerweise zu einer Verkürzung bzw. Verlängerung des Vorformlinges 42 führen wird. Dies muss jedoch nicht unbedingt der Fall sein, da sich bei geringerer Breite des Austrittsspaltes 21 das aus dem Speicherraum ausgestossene Material auf eine grössere Länge des Vorformlinges verteilt. Umgekehrt verteilt sich bei grösserer Breite des Austrittsspaltes 21 das aus dem Speicherraum ausgestossene Material auf eine kürzere Länge des Vorformlinges.

Wenngleich vorstehend die Erfindung in Verbindung mit einer Wanddickensteuerung, die über die Länge des Vorformlinges wirkt, beschrieben wird, ist sie auch ohne weiteres an einer Wanddickensteuerung anwendbar, die zu unterschiedlichen Wanddicken des Vorformlinges über dessen Umfang führt.

Selbstverständlich sind auch Anwendungsfälle der Erfindung denkbar, bei denen am Vorformling eine Wanddickensteuerung gemäss der Erfindung, die über die Länge des Vorformlinges wirkt, kombiniert ist mit einer Wanddickensteuerung, die zu unterschiedlichen Wanddicken des Vorformlinges über dessen Umfang führt. Gleichzeitige Verwendung beider Steuerungen ist auch dann möglich, wenn in beiden Fällen ein Teilbereich des Vorformlinges durch mindestens ein zusätzliches Programm gesteuert wird, welches in der gleichen Richtung, d.h. axial oder in Umfangsrichtung, wie das zugehörige Basisprogramm wirkt.

Bei den in der Zeichnung dargestellten Ausführungsbeispielen ist der Wert x' der zusätzlichen Programmeinrichtung 54 immer mit einem positiven Vorzeichen versehen, so dass x' immer zu einer Vergrösserung $[x + (+x') = x + x']$ der Wandstärke führt. Es ist aber selbstverständlich auch möglich, dass der Wert x' negativ ist und somit zu einer Verringerung $[x + (-x') = x - x']$ der Wandstärke führt, die sich aus dem Wert x der ersten Programmeinrichtung 53 ergibt.

Wenn vorstehend die Erfindung im Zusammenhang mit einer Extrusions-Blasvorrichtung erläutert wird, deren Strangpresskopf einen Speicherraum aufweist mit der Folge, dass der Vorformling diskontinuierlich aus der spaltartigen Austrittsöffnung ausgepresst wird, soll damit keine Beschränkung auf diese Ausführungsform verbunden sein. Die Erfindung ist vielmehr auch bei solchen Extrusions-Blasvorrichtungen anwendbar, bei denen der Vorformling kontinuierlich aus der Austrittsöffnung des Strangpresskopfes austritt. In diesem Fall können als Dimension der Impulse oder anderer Signalfolgen die Zeit, die Länge des Vorformlinges oder andere geeignete Parameter verwendet werden. Ein wesentlicher Vorteil der Erfindung besteht darin, dass sie ohne weiteres an bereits vorhandenen Maschinen und darüber hinaus auch in Kombination mit anderen Regel- und Steuereinrichtungen angewendet werden kann, wie diese beispielsweise in der DE-B Nr. 2540609 und der DE-A Nr. 2940418 beschrieben werden.

**Patentansprüche**

1. Verfahren zum Herstellen eines Vorformlinges (42) aus thermoplastischem Kunststoff mittels eines Extruders, der einen Strangpresskopf (14) mit einem einstellbaren Austrittsspalt (21) aufweist, dessen Breite während des Auspressens des Vorformlinges (42) zur Änderung der Wanddicke desselben durch eine Verstelleinrichtung (17, 22) verändert wird, die durch eine Programmeinrichtung (53) gesteuert wird, die Signale zur Beeinflussung der Verstelleinrichtung (17, 22) abgibt, dadurch gekennzeichnet, dass die Verstelleinrichtung (17, 22) während des Auspressens eines Teilbereiches des Vorformlinges (42) zur Anhäufung von Schaltsignalen in einem bestimmten Bereich des ersten Programmablaufs durch Signale wenigstens einer zusätzlichen Programmeinrichtung (54) beeinflusst wird, die die Signale der ersten Programmeinrichtung (53) überlagern, deren Signale der Beeinflussung der Wandstärke des Vorformlinges (42) über einen längeren Bereich dienen als die der zweiten Programmeinrichtung (54).

2. Verfahren nach Anspruch 1, dadurch gekennzeichnet, dass das zusätzliche Programm (54) zwei- oder mehrmals während des Extrudierens desselben Vorformlinges (42) angewendet wird.

3. Verfahren nach einem der Ansprüche 1 oder 2, dadurch gekennzeichnet, dass die Länge (y') des zusätzlichen Programms (54) und/oder die Werte (x') der Spaltbreite für die wiederholte Anwendung des zusätzlichen Programms (54) auf denselben Vorformling (42) verändert werden.

4. Verfahren nach Anspruch 2, dadurch gekennzeichnet, dass das zusätzliche Programm (54) bei dessen wiederholter Anwendung in bezug auf die Länge (y') spiegelbildlich zur ersten Anwendung auf den Vorformling (42) aufgebracht wird.

5. Vorrichtung zur Durchführung des Verfahrens gemäss Anspruch 1 mit einem Extruder, der einen Strangpresskopf (14) mit einem einstellbaren Ausstrittsspalt (21) aufweist, dessen Breite während des Auspressens des Vorformlinges (42) zur Änderung der Wanddicke desselben durch eine Verstelleinrichtung (17, 22) veränderbar ist, der eine Programmeinrichtung (53) zugeordnet ist, deren Signale die Verstelleinrichtung (17, 22) steuern, dadurch gekennzeichnet, dass der Verstelleinrichtung (17, 22) wenigstens eine zusätzliche Programmeinrichtung (54) zugeordnet ist und die Verstelleinrichtung (17, 22) während des Auspressens eines Teilbereichs des Vorformlinges (42) zur Anhäufung von Schaltsignalen in einem bestimmten Bereich des ersten Programmablaufs durch Signale der zusätzlichen Programmeinrichtung (54) beeinflussbar ist, die die Signale der ersten Programmeinrichtung (53) überlagern, und der Programmablauf der zusätzlichen Programmeinrichtung (54) kürzer ist als der Programmablauf der ersten Programmeinrichtung (53).

6. Vorrichtung nach Anspruch 5, dadurch gekennzeichnet, dass die Schaltpunkte (84) der ersten Programmeinrichtung (53) mit konstanten Abständen voneinander angeordnet sind.

7. Vorrichtung nach einem der vorhergehenden Ansprüche 5 oder 6, dadurch gekennzeichnet, dass die Schaltpunkte (84) der zweiten Programmeinrichtung (54) mit konstanten Abständen voneinander angeordnet sind.

8. Vorrichtung nach einem der vorhergehenden Ansprüche 5 bis 7, dadurch gekennzeichnet, dass die zweite Programmeinrichtung (54) in Abhängigkeit von denselben Kenngrössen wie die erste Programmeinrichtung gesteuert wird.

9. Vorrichtung nach einem der vorhergehenden Ansprüche 5 bis 8, dadurch gekennzeichnet, dass erste Programmeinrichtung (53) und zweite Programmeinrichtung (54) in Abhängigkeit von unterschiedlichen Kenngrössen gesteuert werden.

10. Vorrichtung nach einem der vorhergehenden Ansprüche 5 bis 9, dadurch gekennzeichnet, dass wenigstens eine der beiden Programmeinrichtungen (53, 54) in Abhängigkeit von der Zeit gesteuert wird.

11. Vorrichtung nach einem der vorhergehenden Ansprüche 5 bis 10, dadurch gekennzeichnet, dass wenigstens eine der beiden Programmeinrichtungen (53, 54) bei Verwendung eines Spritzkopfes (14) mit Speicherraum (18), der durch einen Kolben (19) entleerbar ist, in Abhängigkeit vom Kolbenweg während des Kolben-Extrusionshubes gesteuert wird.

12. Vorrichtung nach einem der vorhergehenden Ansprüche 5 bis 11, dadurch gekennzeichnet, dass wenigstens eine der beiden Programmeinrichtungen (53, 54) in Abhängigkeit von der tatsächlichen Länge des Vorformlinges während des Extrusionsvorganges gesteuert wird.

13. Vorrichtung nach einem der vorhergehenden Ansprüche 5 bis 12, dadurch gekennzeichnet, dass der zweiten Programmeinrichtung (54) zwei oder mehr Anpassungsglieder (72, 74; 71, 73) zur Anpassung der Länge (y') des Programms an die Länge des jeweils vom Programm zu beeinflussenden Vorformlingsabschnittes und zur Anpassung der die Breite des Austrittsspaltes (21) betreffenden Werte (x') an die jeweils gewünschte absolute Breite des Austrittsspaltes (21) zugeordnet sind und die Anpassungsglieder (71, 72; 73, 74) wechselweise mit der Programmeinrichtung (54) verbunden werden.

## Revendications

1. Procédé pour réaliser une préforme (42) en matière thermoplastique, au moyen d'une machine d'extrusion comportant une tête de refoulement (14) pourvue d'une fente de sortie (21) réglable, dont on peut faire varier la largeur au moyen d'un dispositif de réglage (17, 22) pendant l'extrusion de la préforme (42), pour modifier l'épaisseur de la paroi de celle-ci, ce dispositif de réglage (17, 22) étant commandé par des signaux émis par un système à programme (53), procédé caractérisé en ce que l'on agit sur le dispositif de réglage (17, 22) pendant l'extrusion d'une partie de la préforme (42) en cumulant des signaux de commande dans une phase déterminée du premier programme, avec des signaux, produits par au moins un dispositif à programme supplémentaire (54), qui se superposent aux signaux du premier système à programme (53), les signaux produits par le premier système à programme (53) commandant la variation d'épaisseur de la paroi de la préforme (42) sur une zone plus longue que la zone d'action des signaux du second système à programme (54).

2. Procédé conforme à la revendication 1, caractérisé en ce qu'on utilise au moins à deux reprises le système à programme supplémentaire (54) pendant l'extrusion de la même préforme (42).

3. Procédé conforme à l'une des revendications 1 ou 2, caractérisé en ce qu'on fait varier la longueur (y') du programme supplémentaire (54) et/ou la valeur (x') de la largeur de la fente d'extrusion pour l'utilisation répétée du programme supplémentaire (54) sur la même préforme (42).

4. Procédé conforme à la revendication 2, caractérisé en ce que, pour répéter le programme supplémentaire (54) sur la préforme (42), on reproduit de manière symétrique dans le sens de la longueur (y') le programme utilisé la première fois.

5. Appareil pour la mise en œuvre du procédé conforme à la revendication 1, au moyen d'une machine d'extrusion comportant une tête de refoulement (14) pourvue d'une fente de sortie réglable (21), dont on peut faire varier la largeur au moyen d'un dispositif de réglage (17, 22) pendant l'extrusion de la préforme, pour modifier l'épaisseur de la paroi de celle-ci, ce dispositif de réglage (17, 22) étant commandé par des signaux émis par un système à programme ou programmateur (53), appareil caractérisé en ce qu'au moins un programmateur supplémentaire (54) est associé au dispositif de réglage (17, 22), ce dernier étant asservi aux signaux de commande du programmateur supplémentaire (54), pendant une phase déterminée du premier programme, correspondant à l'extrusion d'une partie de la préforme (42), les signaux du programmateur supplémentaire (54) se superposant à ceux du premier programmateur (53), et la durée d'exécution du programme du programmateur supplémentaire (54) étant plus courte que celle du programme du premier programmateur (53).

6. Appareil conforme à la revendication 5, caractérisé en ce que les points de définition (84) du premier programmateur (53) sont séparés par des intervalles de valeur constante.

7. Appareil conforme à l'une des revendications 5 ou 6, caractérisé en ce que les points de définition (84) du second programmateur (54) sont séparés par des intervalles de valeur constante.

8. Appareil conforme à l'une des revendications 5 à 7, caractérisé en ce que le second programmateur (54) est asservi aux mêmes grandeurs caractéristiques que le premier programmateur (53).

9. Appareil conforme à l'une des revendications 5 à 8, caractérisé en ce que le premier programmateur (53) et le second programmateur (54) sont asservis à des grandeurs caractéristiques différentes.

10. Appareil conforme à l'une des revendications 5 à 9, caractérisé en ce qu'au moins l'un des deux programmateurs (53, 54) est asservi au temps écoulé.

11. Appareil conforme à l'une des revendications 5 à 10, caractérisé en ce qu'au moins l'un des deux programmateurs (53, 54) est asservi à la course du piston de refoulement (19) qui repousse à travers la tête d'extrusion (14) la matière contenue dans une chambre d'alimentation (18).

12. Appareil conforme à l'une des revendications 5 à 11, caractérisé en ce qu'au moins l'un des deux programmateurs (43, 54) est asservi à la longueur instantanée de la préforme (42) en cours d'extrusion.

13. Appareil conforme à l'une des revendications 5 à 12, caractérisé en ce que le second programmateur (54) est associé à au moins deux blocs d'adaptation (72, 74; 71, 73), agencés pour ajuster la longueur (y') de chaque programme à la longueur de la partie de la préforme concernée par le programme considéré, et pour adapter à chaque instant la valeur de réglage (x') de la largeur de la fente d'extrusion (21) à la valeur désirée, les blocs d'adaptation (71, 72; 73, 74) pouvant être reliés de manière sélective audit programmateur (54).

## Claims

1. A process for the manufacture of a preform (42) of thermoplastic synthetic material by means of an extruder having an extrusion head (14) provided with an adjustable extrusion slot (21) the width of which is changed by an adjustment device (17, 22) during the extrusion of the preform (42) in order to alter the wall thickness of the same, the adjustment device being controlled by a program device, characterised in that the adjustment device (17, 22) is influenced, during the extrusion of a part of the preform (42) for the accumulation of control signals in a particular region of the first program flow, by the signals of at least one auxiliary program device (54) which are superimposed on the signals of the first program device (53), the signals of which serve to influence the wall thickness of the preform (42) for a longer region than those of the second program device (54).

2. A process according to Claim 1, characterised in that the auxiliary program (54) is used twice or more times during the extrusion of the same preform (42).

3. A process according to Claims 1 or 2, characterised in that the length (y') of the auxiliary program (54) and/or the values (x') of the slot width are changed for repeated uses of the auxiliary program (54) for the same preform (42).

4. A process according to Claim 2, characterised in that the auxiliary program (54), when used repeatedly, is applied, with respect to the length (y'), as a mirror image of the first use of the preform (42).

5. A device for carrying out the process according to Claim 1, comprising an extruder having an extrusion head (14) provided with an adjustable extrusion slot (21), the width of which is adjustable during the extrusion of the preform (42) in order to alter the wall thickness thereof by means of an adjustment device (17, 22) which is associated with a program device (53) the signals of which control the adjustment device (17, 22), characterised in that the adjustment device (17, 22) is associated with at least one auxiliary program device (54) and the adjustment device (17, 22) can be influenced during the extrusion of a part of the preform (42) for the accumulation of control signals in a particular region of the first program flow by the signals of the auxiliary program device (54), which are superimposed on the signals of the first program device (53), the program flow of the auxiliary program device (54) being shorter than the program flow of the first program device (53).

6. A device according to Claim 5, characterised in that the switch points (84) of the first program device (53) are arranged at constant distances from one another.

7. A device according to one of the preceding Claims 5 or 6, characterised in that the switch points (84) of the second program device (54) are arranged at constant distances from one another.

8. A device according to one of the preceding Claims 5 to 7, characterised in that the second program device (54) is controlled in dependence on the same characteristics as those of the first program device.

9. A device according to one of the preceding Claims 5 to 8, characterised in that the first program device (53) and the second program device (54) are controlled in dependence on different characteristics.

10. A device according to one of the preceding Claims 5 to 9, characterised in that at least one of the two program devices (53, 54) is controlled in dependence on time.

11. A device according to one of the preceding Claims 5 to 10, characterised in that, when an extrusion head (14) is used which is provided with a storage chamber (18) that can be emptied by means of a piston (19), at least one of the two program devices (53, 54) is controlled in dependence on the piston travel during the extrusion stroke of the piston.

12. A device according to one of the preceding Claims 5 to 11, characterised in that at least one of the two program devices (53, 54) is controlled in dependence on the actual length of the preform during the extrusion process.

13. A device according to one of the preceding Claims 5 to 12, characterised in that the second program device (54) is provided with two or more modification members (72, 74; 71, 73) for adjusting the length (y') of the program to the length of that section of the preform which is to be influenced by the program on any given occasion, and for adjusting the values (x') related to the width of the extrusion slot (21) to the desired absolute width of the extrusion slot (21) on any occasion and that the modification members (71, 72; 73, 74) are alternately connected with the program device (54).

FIG.1

FIG.2a

FIG.2b

FIG.2c

FIG.3a

FIG.3b

0 058 297

17